# EUROPEAN PATENT SPECIFICATION

(11) **EP 1 413 355 B1**
(45) Date of publication and mention of the grant of the patent: **06.11.2013**
(21) Application number: 02736075.9
(22) Date of filing: 12.06.2002
(51) Int. Cl.: B01J 35/02

(54) **PHOSPHATE PHOTOCATALYST COMPRISING METAL ION IN D10 OR D0 ELECTRON STATE**
PHOSPHAT-PHOTOKATALYSATOR MIT EINEM METALLION IM D10- ODER D0-ELEKTRONENZUSTAND
PHOTO-CATALYSEUR PHOSPHATE COMPORTANT UN ION METALLIQUE EN ETAT ELECTRONIQUE D10 OU D0

(30) Priority: 12.07.2001 JP 2001211959
(43) Date of publication of application: 28.04.2004
(73) Proprietor: Japan Science and Technology Agency, Kawaguchi-shi, Saitama 332-0012 (JP)
(72) Inventor: INOUE, Yasunobu, Nagaoka-shi, Niigata 940-0041 (JP)
(74) Representative: Benson, John Everett
(86) International application number: PCT/JP2002/005862
(87) International publication number: WO 2003/008097

(56) References cited:
- JP-A- 2000 189 806
- SATO J ET AL: "NEW PHOTOCATALYST GROUP FOR WATER DECOMPOSITION OF RUO2-LOADED P-BLOCK METAL (IN, SN, AND SB) OXIDES WITH D10 CONFIGURATION" JOURNAL OF PHYSICAL CHEMISTRY, AMERICAN CHEMICAL SOCIETY, US, vol. 105, no. 26, 5 July 2001 (2001-07-05), pages 6061-6063, XP002948575 ISSN: 0022-3654
- NORIHIRO TANAKA: 'PO4 shimentai o fukumu tunnel kozo kagobutsu ni yoru hikari bunkai hanno' DAI 88 KAI SHOKUBAI TORONKAI TORONKAI A YOKOSHU 20 September 2001, page 177, XP002958373
- JUNYA SATO: 'd10 denshi jotai no in3+ o fukumu kinzoku sankabutsu ni yoru mizu no hikari bunkai hanno' CSJ: THE CHEMICAL SOCIETY OF JAPAN DAI 81 SHUNKI NENKAI KOEN YOKOSHU I 11 March 2002, page 126, XP002958374
- MITSURU KAWANO: 'Tunnel kozo o motsu titan sankabutsu ni okeru hikari reiki denkashu no seisei to hikari shokubai sayo' SHOKUBAI vol. 37, no. 6, 1995, pages 420 - 423, XP002958375

## Description

### FIELD OF THE INVENTION

The present invention relates to a RuO₂-loaded phosphate photo-catalyst having novel structure containing metallic ion in d¹⁰ or d⁰ configuration, and further containing alkali metal that is Na, K or Li as a consituent element, in particular relates to a catalyst for the complete decomposition of water. The photocatalyst is defined below.

### BACKGROUND OF THE INVENTION

The photo decomposing reaction of water have been interested in from the view point of photo energy transformation. And the photo-catalyst which indicates activity to the photo decomposing reaction can be considered as a high quality photo functional material providing a function such as photo absorption, electrolytic separation or oxidation-reduction reaction at the surface.

The inventors of the present invention already reported that BatiO₄O₉ having pentagonal prism shape tunnel structure or M₂Ti₆O₁₃ (M=Na, K, Rb) having oblong shape tunnel structure can own an excellent activity to the complete decomposing reaction of water. Further, the inventors of the present invention also reported that in the case of this catalyst, the photocatalytic activity changes depend on the temperature at the oxidizing treatment, and in the case of BaTiO₄O₉, the inner crystalline polarization (increase of dipole moment) caused by incommensurate structure of TiO₂ octahedron contributes the high activity.

However, the reported solid photo-catalyst which is useful for the complete photocatalytic decomposing reaction is an oxide of transition metal in d⁰ configuration and limited to an oxide containing Ti, Zr, Nb and Ta.

The subject of the present invention is to provide a photo-catalyst of novel chemical constitution and structure apart from above mentioned metal oxide.

JP 2000189806 provides a photocatalyst containing a laminar composite metal compound represented by general formula AMWO₆, wherein A is an alkali metal and/or hydrogen and M is at least one element chosen from V, Nb and Ta. A further metal chosen from Pt, Ru, Rh, Ir and Ni or oxides thereof may also be included.

Sato et al in Journal of Physical Chemistry, American Chemical Society, US, vol 105, no. 26, 5 July 2001, pages 6061-6063 provide a photocatalyst in which RuO₂ is combined with MIn₂O₄ (where M is Ca, Sr), Sr₂SnO₄ or NaSbO₃.

Sato et al in Chemical Society of Japan, DAI 81 Shunki Nenkai Koen, Yokoshu I, 11 March 2001, page 126 provide a photocatalyst in which RuO₂ is carried on LaInO₃ where In3⁺ has a peroxide structure and NaInO₂ has a deraphosite structure.

### DISCLOSURE OF THE PRESENT INVENTION

The invention provides the following:
(i) a photo-catalyst comprising RuO₂ supported on a carrier compound having a network structure in which structural units each constituting an oxygen octahedron or tetrahedron are linked to structural units each constituting a PO₄ tetrahedron, the compound further containing an alkali metal, wherein the carrier has the empirical formula AₓMe₂ₘP₄O₆ₘ₊₈, wherein A is Na, K or Li, Me is Nb or Ta in the d⁰ configuration, x is 2, 3 or 4 and m is 3, 3.5 or 4, or wherein the carrier compound has the empirical formula A₃InₘPₘ₊₁O₄ₘ₊₄, wherein A is Na, K or Li ion, m is 1 or 2 and In is in the d¹⁰ configuration;
(ii) a photocatalyst according to (i), wherein the oxygen octahedra containing the transition metal ion in d⁰ configuration are strained and have a dipole moment;
(iii) a photocatalyst according to (i), wherein the oxygen octahedra containing the transition metal ion in d¹⁰ configuration are strained and have a dipole moment;
(iv) use of a photocatalyst according to any one of (i) to (iii) for the complete decomposition of water; and
(v) a process for decomposing water comprising contacting a catalyst according to any one of (i) to (iii) with water and exposing the catalyst to a 400W Xe short arc lamp or a 200W Hg-Xe lamp.

### BRIEF ILLUSTRATION OF THE DRAWINGS

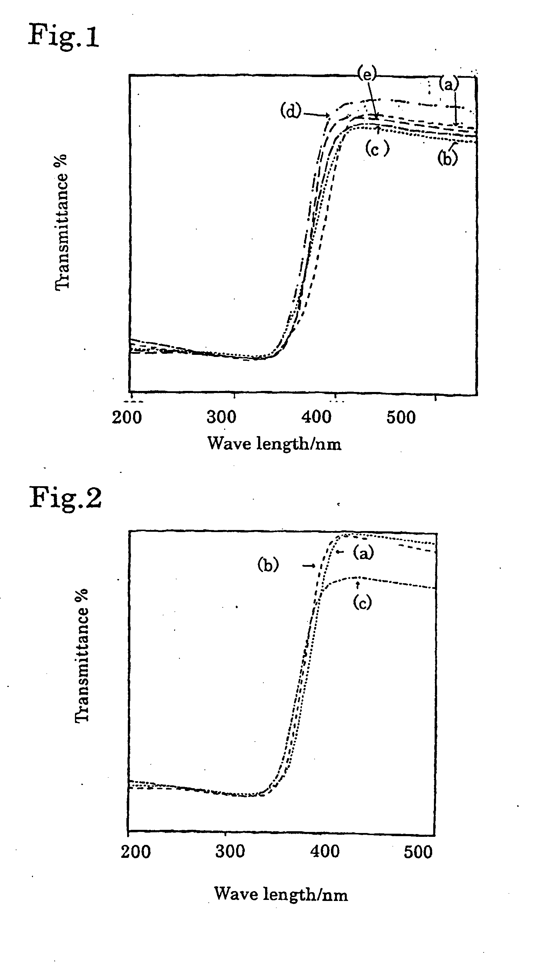

Fig.1 shows the UV diffuse reflectance spectrum of Na₄Ta₈P₄O₃₂ prepared by calcination temperature from 800°C to 1100°C. In the case of 800 °C (1073K) (a), the photo absorption starts from 420nm and the maximum absorption wave length exists at closely to 350nm. Along with the elevation of the calcination temperature, the absorption end shifts slightly to the shorter wave length side, and at the calcination temperature of 1100°C(e), the absorption end becomes 400nm, which is the shortest wave length. (b), (c) and (d) show respectively the UV diffuse reflectance spectrum of Na₄Ta₈P₄O₃₂ calcined at 900°C, 1000°C and 1050°C. The change of the maximum absorption wave length along with the elevation of the calcination temperature is not observed. Incline of the absorption increased along with the elevation of the calcination temperature.
In Fig.2, (a) shows the UV diffuse reflectance spectrum of Na₄Nb₆P₄O₂₆ calcined at 1000°C (1273K), (b) shows the UV diffuse reflectance spectrum of Na₃Nb₇P₄O₂₉ and (c) shows the UV diffuse reflectance spectrum of Na₄Nb₈P₄O₃₂. In the case of Na₄Nb₆P₄O₂₆ (a), the absorption of light starts from 420nm and indicates maximum absorption at 350nm around. In the case of Na₃Nb₇P₄O₂₉ (b), the absorption of light starts from 410nm and indicates maximum absorption at 350nm around. And, in the case of Na₄Nb₈P₄O₃₂ (c), the absorption of light starts from 410nm and indicates maximum absorption at 330nm around.
Fig.3 shows the crystalline structure of Na_{X}Nb₂ₘP₄O₆ₘ₊₈ (X is 2, 3 or 4, m=3, 3.5 or 4), oxygen octahedron NbO₆ and dipole moment (an arrow) of PO₄ tetrahedron.
Fig.4 shows photo-catalytic reaction of water decomposition in repeated run on a RuO₂/Na₄Nb₈P₄O₃₂ photo-catalyst under 100W Hg-Xe lamp as a light source. Na₄Nb₈P₄O₃₂ (X=4, m=4) was obtained by calcination at 1050°C and loaded Ru species was oxidized at 450°C. In the first run, an induction period is observed at the initial stage of the reaction and in the second run, small induction period is observed. In the third run, H₂ and O₂ generates from the initial stage and the generating ratio of H₂ and O₂ is 2:1.
Fig.5 shows photo-catalytic reaction of water decomposition in repeated run on a RuO₂/Na₂Nb₆P₄O₂₆ (a) and a RuO₂/Na₃Nb₇P₄O₂₉ (b) photo-catalyst under 100W Hg-Xe lamp as a light source.
Fig.6 shows the comparison of photo-catalytic activity of RuO₂/Na₂Nb₆P₄O₂₆, RuO₂/Na₃Nb₇P₄O₂₉ and RuO₂/Na₄Nb₈P₄O₃₂.
Fig.7 shows the relationship of the calcination temperature of Na₄Nb₈P₄O₃₂ which has influence on the photo-catalytic activity of RuO₂/Na₄Nb₈P₄O₃₂.
Fig.8 shows the relationship of the RuO₂ loading amount which has influence on the photo-catalytic activity of RuO₂/Na₄Nb₈P₄O₃₂.
Fig.9 shows the oxidation temperature dependency of Ru₃(CO)₁₂ complex which has influence on the photo-catalytic activity of RuO₂/Na₄Nb₈P₄O₃₂.
Fig.10 shows the diffuse reflectance spectrum of Li₄Ta₃P₄O₃₂ and Na₄Ta₈P₄O₃₂.
Fig.11 shows the diffuse reflectance spectrum of Na₄Ta₈P₄O₃₂ prepared by calcination temperature of (a) 800°C, (b) 900°C, (c) 1000°C and (d) 1100°C.
Fig.12 shows photo-catalytic reaction in repeated run on a RuO₂/Na₄Ta₈P₄O₃₂ photo-catalyst under 200W Hg-Xe lamp as a light source. Na₄Ta₈P₄O₃₂ was obtained by calcination at 900°C and loaded Ru species was oxidized at 450°C.
Fig.13 shows photo-catalytic reaction in repeated run on a RuO₂/Na₄Ta₈P₄O₃₂ photo-catalyst under 400W Xe lamp as a light source. Na₄Ta₈P₄O₃₂ was obtained by calcination at 900°C and loaded Ru species was oxidized at 450°C.
Fig.14 shows photo-catalytic reaction in repeated run on a RuO₂/Li₄Ta₈P₄O₃₂ photo-catalyst under 200W Hg-Xe lamp as a light source. Li₄Ta₈P₄O₃₂ was obtained by calcination at 900°C and loaded Ru species was oxidized at 450°C.
In Fig.15, the photo-catalyst reaction rate of RuO₂/Li₄Ta₈P₄O₃₂ and RuO₂/Na₄Ta₈P₄O₃₂ at steady state are shown in comparison.
Fig.16 shows the relationship of the calcination temperature of Na₄Ta₈P₄O₃₂ which has influence on the photo-catalytic activity of RuO₂/Na₄Ta₈P₄O₃₂.
Fig.17 shows the oxidation temperature dependency of Ru₃(CO)₁₂ complex which has influence on the photo-catalytic activity of RuO₂/Na₄Ta₈P₄O₃₂.
Fig.18 shows the irradiation light dependency of RuO₂/Na₄Ta₈P₄O₃₂ photo-catalyst obtained by using a light source characterizing by combining 400W Xe lamp and a wavelength cut off filter.
Fig.19 shows the diffuse reflectance spectrum of Na₃InP₂O₈.

### DESCRIPTION OF THE PREFERRED EMBODIMENT

The present invention will be illustrated more in detail.

### (1) Preparation of A_{X}Me₂ₘP₄O₆ₘ₊₈

At the preparation of A_{X}Me₂ₘP₄O₆ₘ₊₈, as the supplying material for alkali metal, for example, compound which provide alkali metal at the calcination such as A₂CO₃ (A is alkali metal), as the Nb supplying material, for example, Nb₂O₅ or compound which generates Nb₂O₅ by calcination and as the starting material for phosphoric acid, compound which supply phosphoric acid by calcination such as (NH₄)₂HPO₄ are used. These compounds are weighted so as to be stoichiometric ratio, mixed by an appropriate mixing machine, transferred to an alumina crucible for calcination, then calcined by an electric furnace under atmospheric pressure at the temperature from 700°C to 1150°C for 16 hours. Thus A_{X}Me₂ₘP₄O₆ₘ₊₈ is prepared.

### (2) Preparation of A_{X}Ta₂ₘP₄O₆ₘ₊₈ (wherein A is Na, K or Li, X is 3 or 4, m is 3, 3.5 or 4)

As the supplying material for alkali metal and material for phosphoric acid, same compound to above (1) can be used. As the supplying material for Ta, for example, Ta₂O₅ or a compound which generates Ta₂O₅ by calcination can be used. These compounds are weighted so as to be stoichiometric ratio, mixed by an appropriate mixing machine, transferred to an alumina crucible for calcination, then calcined by an electric furnace under atmospheric pressure at the temperature from 800°C to 1100°C for 16 hours. Thus A_{X}Ta₂ₘP₄O₆ₘ₊₈ is prepared.

### (3) Preparation of A₃InP₂O₈ (A is alkali metal such as Na, K or Li)

As the supplying material for alkali metal and material for phosphoric acid, same compound to above (1) can be used. As the supplying material for In₂O₃, for example, In₂O₃ or a compound which generates In₂O₃ by calcination can be used. These compounds are weighted so as to be stoichiometric ratio, mixed by an appropriate mixing machine, transferred to an alumina crucible for calcination, then calcined by an electric furnace under atmospheric pressure at the temperature of 850°C for 16 hours. Thus A₃InP₂O₈ is prep ared. (4) Method to load RuO₂ on the compounds obtained in said (1) to (3).

To the phosphate compound obtained in said (1) to (3) RuO₂ is loaded using Ru carbonyl complex Ru₃(CO)₁₂. RuO₃(CO)₁₂ is dissolved in tetrahydrofuran (hereinafter shortened to THF) so as the loading amount of RuO₂ (converted to metal Ru) to be prescribed weight%. Phosphate compound is added to the obtained solution and refluxed for 4 hours at 60°C with constant stirring by a stirrer. After that, THF is evaporated using an aspirator and dried in a drying oven of 80°C for 30 minutes. Under the atmospheric pressure, the obtained product is oxidized by the condition of 300°C to 600°C temperature for 5 hours and the RuO₂-loaded photo-catalyst is obtained.

Ru (acac) can be used instead of Ru₃(CO)₁₂.

### (5) Reaction apparatus for testing the activity of photo-catalyst of complete decomposition of water

The photo decomposing reaction of water is carried out using closed circulation type reaction apparatus. This apparatus is consisting of a high vacuum exhausting part, a reacting cell for light irradiation made of quartz, a circulation pump for air circulation, a pressure guage and a gas chromatograph which is directly connected to the reaction apparatus for the purpose to measure the composition of gas. As the light source, Xe short arc lamp is used by 400w condition, or Hg-Xe lamp is used by 200W condition.

### (6) Reactive condition

In said quartz reacting cell, 250mg of prepared photo-catalyst and 30mL of ultra-pure water are contained and equipped to the reaction system and inner air is exhausted by vacuum. For the purpose to remove dissolved oxygen in water completely, argon gas is brown in the water more than 40 minutes, then is exhausted by vacuum again. After that, argon gas is introduced into system by 100torr, and the catalyst is dispersed into water by circulation using a circulation pump, and light is irradiated to carry out the reaction. The quantitative analysis of generated H₂ and O₂ gases is carried out by a gas chromatograph which is directly connected to the reaction apparatus.

### EXAMPLES

The present invention will be illustrated more concretely according to the Examples, but not intending to interpret the scope of the present invention restrictly.

### Example 1

The X ray diffract pattern of Na_{X}Nb₂ₘP₄O₆ₘ₊₈ (X is 2, 3 or 4, m=3, 3.5 or 4);

From the X ray diffract pattern of Na₄Nb₈P₄O₃₂ which was prepared by changing the calcination temperature from 700°C to 1150°C, it was understood that Nb₂O₅ remains partially as a non reacted product. The X ray diffract pattern of the specimen prepared at the temperature limitation from 800°C to 1100°C generated strong peaks at 2θ=22.12°, 22.86° and 28.28° which are belonging respectively to (311), (330) and (331) face, and indicated good coincidence with the patterns described in JCPDS card.

At the temperature higher than 1150°C, since Na₄Nb₈P₄O₃₂ was fused and became glass state, Na₄Nb₈P₄O₃₂ was not suited to the use of the photo-catalyst. From this phenomenon, it became clear that Na₄Nb₈P₄O₃₂ prepared in the temperature region from 800°C to 1000°C is suited as the photo-catalyst.

The X ray diffract pattern of Na₃Nb₈P₄O₃₂ and Na₂Nb₆P₄O₃₆ prepared by the temperature 1000°C, showed good coincidence with the patterns described in JCPDS card.

The reflectance spectrum of Na_{X}Nb₂ₘP₄O₆ₘ₊₈ (X is 2, 3 or 4, m=3, 3.5 or 4);

Fig.1 shows the UV diffuse reflectance spectrum of Na₄Ta₈P₄O₃₂ prepared by calcination temperature from 800°C to 1100°C. In the case of 800°C (1073K) (a), the photo absorption started from 420nm and the maximum absorption wave length existed at 350nm around. Along with the elevation of the calcination temperature, the absorption end shifted slightly to the shorter wave length side, and at the calcination temperature of 1100°C(e), the absorption end became 400nm, which was the shortest wave length. The change of the maximum absorption wave length along with the elevation of the calcination temperature was not observed. Incline of the absorption increased along with the elevation of the calcination temperature.

In Fig.2, following UV diffuse reflectance spectrums are shown in comparison, that is, Na₄Nb₆P₄O₂₆ (a) calcined at 1000°C, Na₃Nb₇P₄O₂₉ (b) and Na₄Nb₈P₄O₃₂ (c). In the case of Na₄Nb₆P₄O₂₆ (a), the absorption of light started from 420nm and indicated the maximum absorption at 350nm around. In the case of Na₃Nb₇P₄O₂₉ (b), the absorption of light started from 410nm and indicated the maximum absorption at 350nm around. And, in the case of Na₄Nb₈P₄O₃₂ (c), the absorption of light started from 410nm and indicated the maximum absorption at 330nm around.

Scanning electric microscope (SEM) image and average particle size; From the observation of SEM image of Na₄Nb₈P₄O₃₂, it was clearly understood that in the specimen prepared by calcination temperature of 800°C, large particles and small particles were mixed and the particle size was not uniform. In the specimen prepared by calcination temperature of 900°C (1173K), the particles were fine and had uniform distribution, and in the case of 1000 °C particles became remarkably large and this phenomenon was maintained by 1100°C. And the average particle size of Na₄Nb₈P₄O₃₂ became larger from 2.4 µm to 4.3 µm along with the elevation of the calcination temperature.

The SEM images of Na₄Nb₆P₄O₂₆ and Na₃Nb₇P₄O₂₉ calcined at 1000°C, indicated a multi angled block particle shape having similar shape angle with Na₄Nb₈P₄O₃₂, and the average particle size of Na₄Nb₆P₄O₂₆ was 3.7µ m, and that of Na₃Nb₇P₄O₂₉ was 5.1µm.

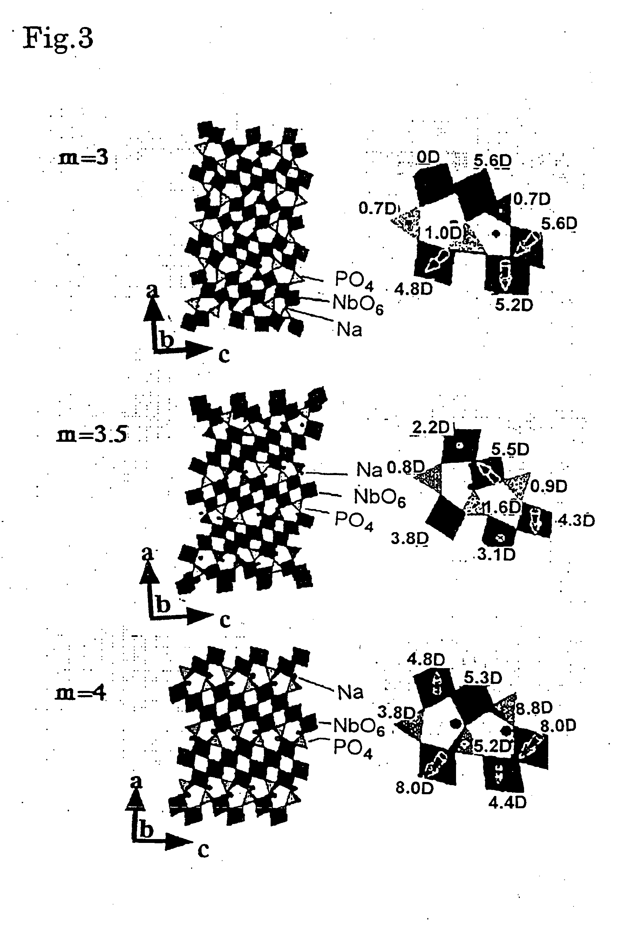

In Fig.3, the crystalline structure of Na_{X}Nb₂ₘP₄O₆ₘ₊₈ (X is 2, 3 or 4, m=3, 3.5 or 4), oxygen octahedron NbO₆ and dipole moment (an arrow) of PO₄ tetrahedron and the configuration in Na crystalline are shown. And in Table 1, the dipole moment (Debye) of the crystal shown in Fig.3 and the photo decomposition activity characteristic [mol/1hour (h)] of water of the photo-catalyst prepared by loading RuO₂ to the crystal are shown.

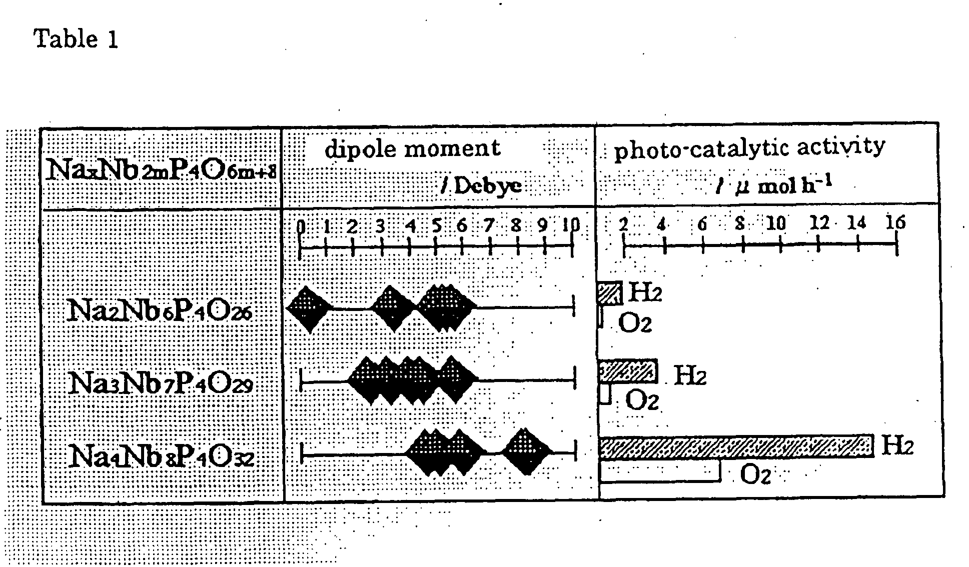

The reaction characteristics of RuO₂/Na_{X}Nb₂ₘP₄O₆ₘ₊₈ (X is 2, 3 or 4, m=3, 3.5 or 4) by photo-catalyst is illustrated as follows.

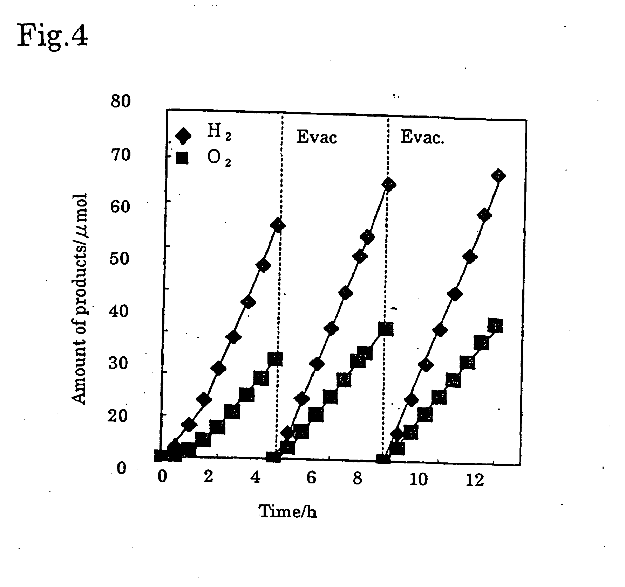

In Fig.4, photo-catalytic reaction of water decomposition in repeated run on a RuO₂/Na₄Nb₈P₄O₃₂ photo-catalyst under 100W Hg-Xe lamp as a light source is shown. Na₄Nb₈P₄O₃₂ (X=4, m=4) was obtained by calcination at 1050°C and loaded Ru species was oxidized at 450°C. In the first run, an induction period is observed at the initial stage of the reaction and in the second run, small induction period is observed. In the third run, H₂ and O₂ generates from the initial stage and the generating ratio of H₂ and O₂ is 2:1.

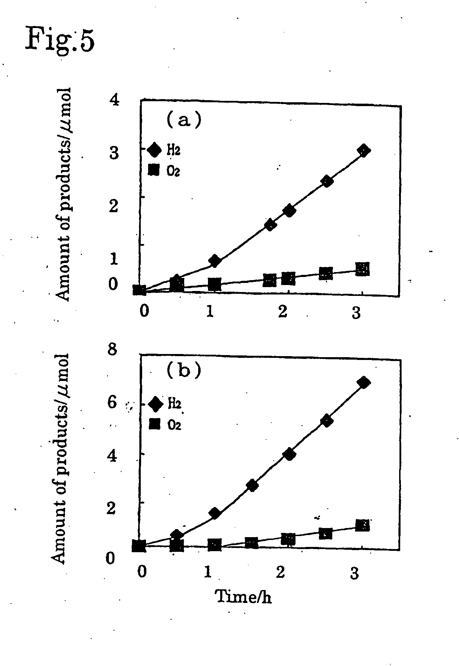

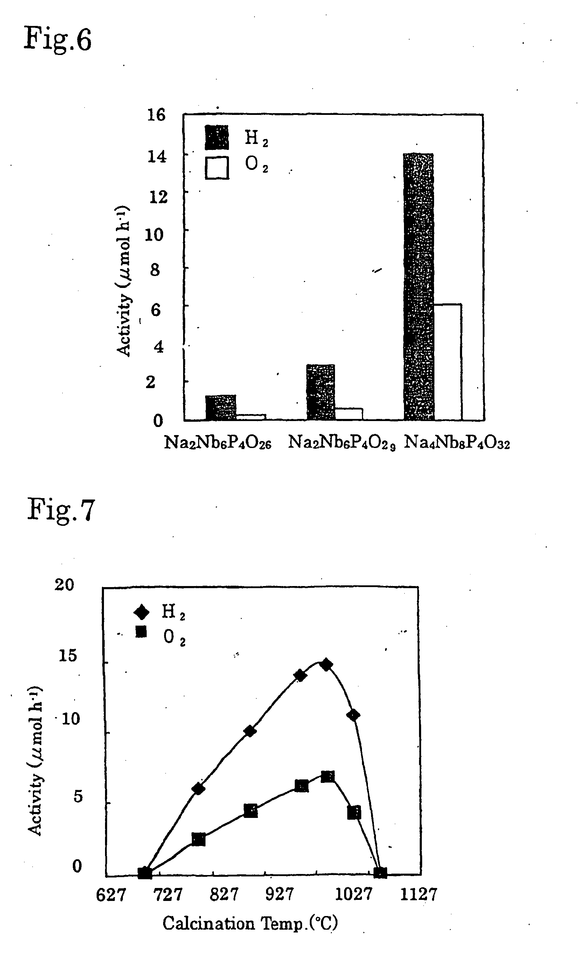

In Fig.5, the results of photo decomposing reaction of water by photo-catalyst RuO₂/Na₂Nb₆P₄O₂₆ (a) and RuO₂/Na₃Nb₇P₄O₂₉ (b) are shown. In the case of RuO₂/Na₂Nb₆P₄O₂₆, the generation of O₂ increased linearly from the initial stage, however, regarding the generation of H₂, the induction period was observed and after 1.5 hours lapse, the generation of H₂ increased linearly. The rate where the photo-catalyst reaction becomes the steady state was used as the aim of the photo-catalytic activity, and the photo-catalytic activity of RuO₂/Na₂Nb₆P₄O₂₆, RuO₂/Na₃Nb₇P₄O₂₉ and RuO₂/Na₄Nb₈P₄O₃₂ were compared (Fig.6).

As clearly understood from Fig.6, the photo-catalytic activity of these photo-catalysts can be ranked as follows. That is, RuO₂/Na₂Nb₆P₄O₂₆<RuO₂/Na₃Nb₇P₄O₂₉<RuO₂/Na₄Nb₈P₄O₃₂. Especially, in the case of H₂ generating activity, RuO₂/Na₄Nb₈P₄O₃₂ displayed from 5 times to 10 times higher activity than other photo-catalysts.

The relationship of the calcination temperature of Na₄Nb₈P₄O₃₂ which has influence on the photo-catalytic activity of RuO₂/Na₄Nb₈P₄O₃₂;

In Fig.7, the dependency of the calcination temperature of Na₄Nb₈P₄O₃₂ which has influence on the photo-catalytic activity of RuO₂/Na₄Nb₈P₄O₃₂ is shown. In the case of photo-catalyst calcined at 700°C, the activity of both H₂ and O₂ became very low. The activity was improved along with the elevation of the calcination temperature, and indicated the maximum activity at 1050°C, and by calcination by higher temperature than said temperature, the photo-catalytic activity became low. When the H₂/O₂ ratio was compared, the ratio at 800°C was 2.5, at 1050°C was 2.2 and at 1100°C was 2.7, and these results showed that the photo-catalyst having higher activity displayed closer H₂ and O₂ generating ratio 2:1, which is the stoichiometric ratio.

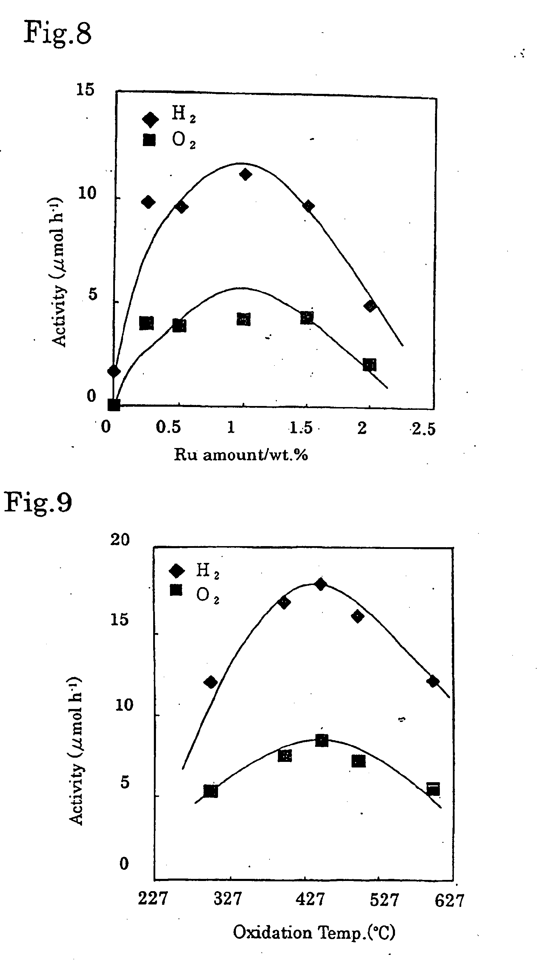

Relationship between RuO₂ loading amount and catalytic activity; In Fig.8, the dependency of loading amount of RuO₂ which has influence on the photo-catalytic activity of RuO₂/Na₄Nb₈P₄O₃₂. The activity was improved slowly from 0.25wt% to 1wt%, and displayed the maximum activity at 1wt%, further, when the loading amount of RuO₂ exceeded 1wt%, the activities of H₂ and O₂ were both deteriorated.

Relationship between oxidation temperature after Ru is loaded and photo-catalytic activity
In Fig.9, change of the photo-catalytic activity of RuO₂/Na₄Nb₈P₄O₃₂ prepared by changing the oxidation temperature of the loaded Ru₃(CO)₁₂ complex is shown. When the oxidation treatment temperature was elevated from 300°C, the activity was also improved, indicated the maximum activity at 450 °C and H₂, O₂ generating almost accomplished the stoichiometric ratio. When the oxidation temperature was elevated more, the H₂ generating activity and O₂ generating activity were both deteriorated.

### Example 2

X-ray diffraction pattern of A₄Ta₈P₄O₃₂ (A=Li or Na);
Although the X-ray diffraction pattern of the compounds of Li₄Ta₃P₄O₃₂ and Na₄Ta₃P₄O₃₂ were not recorded as JCPD card, regarding Li₄Ta₃P₄O₃₂, strong peaks appeared at 2θ =20.24°, 22.26° and 23.94° and very similar to the X-ray diffraction pattern of Na₄Nb₈P₄O₃₂. In the X-ray diffraction pattern of Na₄Ta₃P₄O₃₂ prepared by changing the calcination temperature from 800°C to 1100°C, in the case of Na₄Ta₃P₄O₃₂ calcined at 800°C, the peak of Ta₂O₅ which is a starting material remained clearly besides the peak based on Na₄Ta₃P₄O₃₂. At the calcination by 800°C, the peak of Ta₂O₅ reduced remarkably, the peak based on Na₄Ta₃P₄O₃₂ became higher. At the calcination by 1000°C, the peak became almost only one peak based on Na₄Ta₃P₄O₃₂. At the calcination by 1000°C, the strong peak of Na₄Ta₃P₄O₃₂ appeared.

Diffuse reflectance spectrum of A₄Ta₈P₄O₃₂ (A=Li, Na)

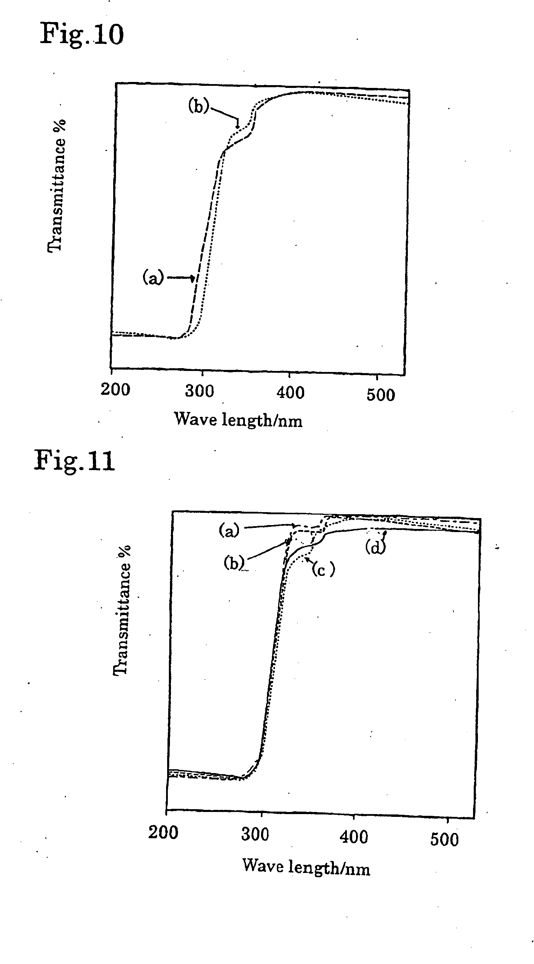

In Fig.10, diffuse reflectance spectrum of Li₄Ta₃P₄O₃₂ (a) and Na₄Ta₈P₄O₃₂ (b) are shown. In the case of Li₄Ta₃P₄O₃₂, the photo absorption started from 390nm, had a absorption shoulder at 350nm around and indicated the maximum absorption at 280nm. In the case of Na₄Ta₈P₄O₃₂, indicates same absorption pattern, namely, the photo absorption started from 380nm, the absorption shoulder of 345nm around appeared small and the sharp absorption 300nm around shifted to the longer wave length side. The wave-length of the maximum absorption was 285nm.

In Fig.11, the diffuse reflectance spectrum of Na₄Ta₈P₄O₃₂ prepared by calcination temperature of 800°C (a) - 1100°C (d). In the case of 800°C (a), photo absorption started from 360nm, the absorption shoulder appeared closely and the maximum absorption appeared at 280nm around. When the calcination temperature elevated to 1100°C (d), the absorption starting wave length and the maximum absorption wave length did not change. However, the absorption shoulder, which appears from 340nm to 310nm, increased along with the elevation of the calcination temperature within the region from 800°C to 1000°C, on the contrary, at the calcination temperature of 1100°C, it decreased slightly.

SEM image of A₄Ta₈P₄O₃₂ (A=Li or Na) and average particle size;
According to the observation of SEM images of Na₄Ta₈P₄O₃₂ which were calcined at the calcination temperature from 800°C to 1000°C, it was understood that the shape of said Na₄Ta₈P₄O₃₂ particles were ununiform block shape. By the elevation of the calcination temperature from 800°C to 1000°C, the particle size became larger radically from 2.9µm to 5.3µm, and from 900°C to 1100°C, the particle size became larger generously from 5.3 µm to 7.6 µm.

Example of the photo-catalytic reaction;
Decomposing reaction of water by RuO₂-loaded A₄Ta₈P₄O₃₂ (A=Li or Na);

The photo-catalyst was prepared by loading RuO₂ on A₄Ta₈P₄O₃₂ (A=Li or Na) and carried out the photo-catalyst reaction experiment aiming photo decomposition of water.

Change of reaction by time lapse

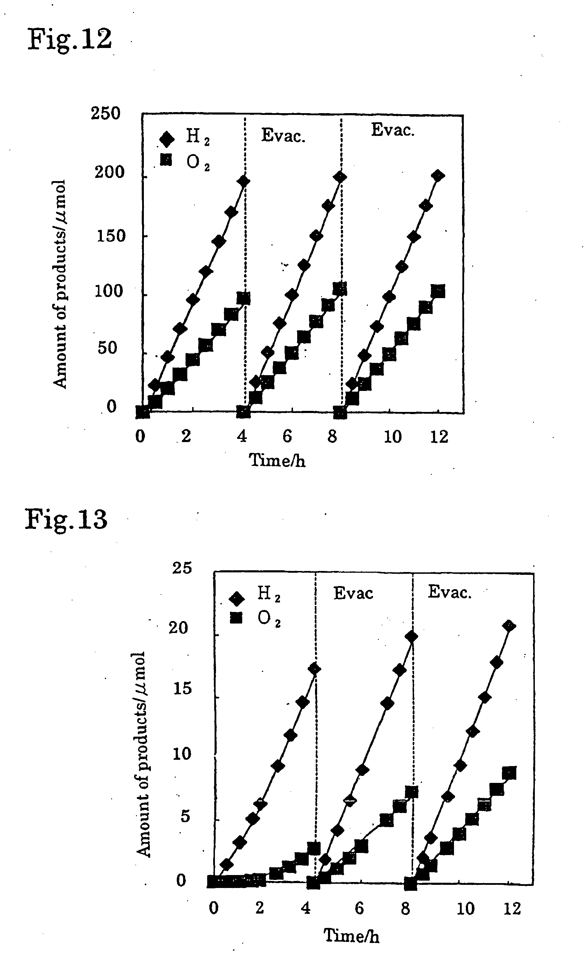

In Fig.12, photo-catalytic reaction in repeated run on a RuO₂/Na₄Ta₈P₄O₃₂ photo-catalyst under 200W Hg-Xe lamp as a light source is shown. Na₄Ta₈P₄O₃₂ was obtained by calcination at 900°C and loaded Ru species was oxidized at 450°C. In the first run, H₂ and O₂ generation increased linearly from the initial stage of the photo irradiation. Even if the gaseous component was exhausted (deaerated) and the run was repeated, the activity was almost same, and the stable generation of H₂ and O₂ could be also observed in the third repeated run, and the generation ratio of H₂ and O₂ was 2:1.

In Fig.13, photo-catalytic reaction in repeated run on a RuO₂/Na₄Ta₈P₄O₃₂ photo-catalyst under 400W Xe lamp as a light source is shown. Na₄Ta₈P₄O₃₂ was obtained by calcination at 900°C and loaded Ru species was oxidized at 450°C. In the first run, the induction period was observed at the initial stage of the reaction, and after 2 hours lapse generation of H₂ and O₂ became stable. When the run was repeated, the induction period was observed from the second run, and the stable generation of H₂ and O₂ could be observed from the initial stage of the photo irradiation. Regarding the generating amount, become normal after second run.

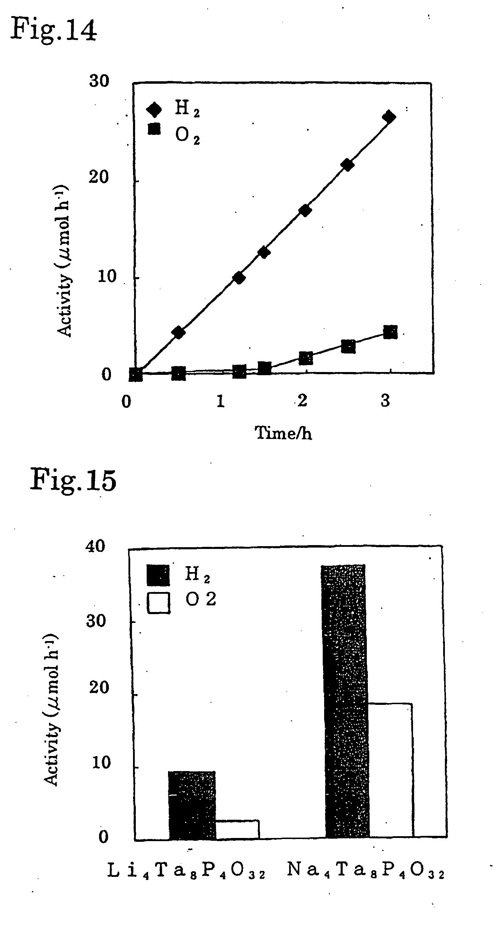

In Fig.14, photo-catalytic reaction of water decomposition in repeated run on a RuO₂/Li₄Ta₈P₄O₃₂ photo-catalyst under 200W Hg-Xe lamp as a light source is shown. Li₄Ta₈P₄O₃₂ was obtained by calcination at 900°C and loaded Ru species was oxidized at 450°C. H₂ generation was stable from the start of photo irradiation. O₂ generation increased gradually from the initial stage of the reaction and become stable after 1.5 hours.

Comparison of photo-catalytic activity of RuO₂/A₄Ta₈P₄O₃₂ (A=Li or Na)
The photo-catalytic reaction rate at the steady state of RuO₂/Li₄Ta₈P₄O₃₂ and
RuO₂/Na₄Ta₈P₄O₃₂ were compared and the results are shown in Fig.15. RuO₂/Na₄Ta₈P₄O₃₂ indicated 4 times higher activity than RuO₂/Li₄Ta₈P₄O₃₂.

The relationship between calcination temperature of Na₄Ta₈P₄O₃₂ and the photo-catalytic activity in the photo-catalytic activity of RuO₂/Na₄Ta₈P₄O₃₂;

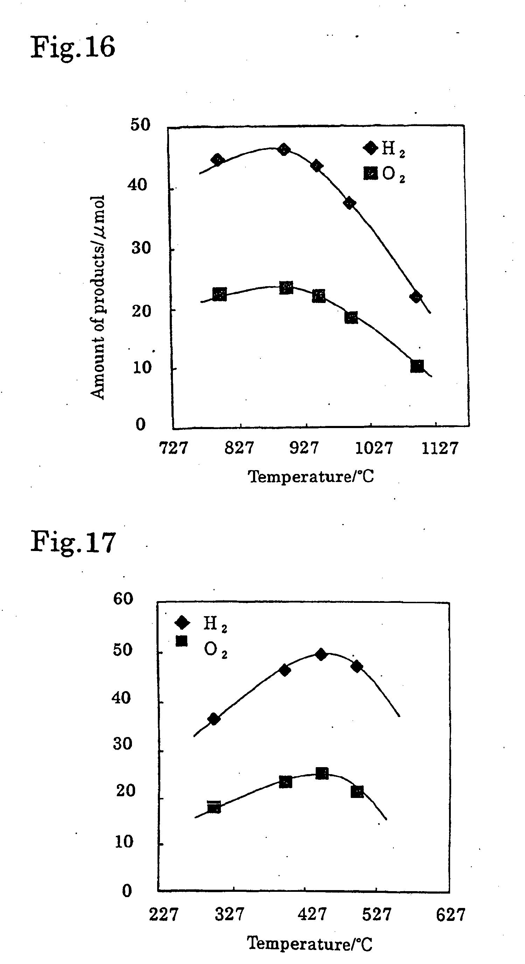

In Fig.16, the change of photo-catalytic activity when the calcination temperature of Na₄Ta₈P₄O₃₂ was changed from 800°C to 1100°C is shown. The activity improved generously from 800°C to 1100°C, and indicated the maximum activity at 900°C. When the calcination temperature is further elevated, the photo-catalytic activity deteriorated suddenly at 1100°C. H₂/O₂ generation ratio in the region from 800°C to 1100°C was 2:1.

Ru oxidation temperature dependency of RuO₂/Na₄Ta₈P₄O₃₂;
Ru oxidation temperature dependency is shown in Fig.17. When the oxidation temperature was elevated from 300°C, the activity was also improved and indicated the maximum activity at 450°C.

Irradiation light dependency of RuO₂/Na₄Ta₈P₄O₃₂ photo-catalyst;

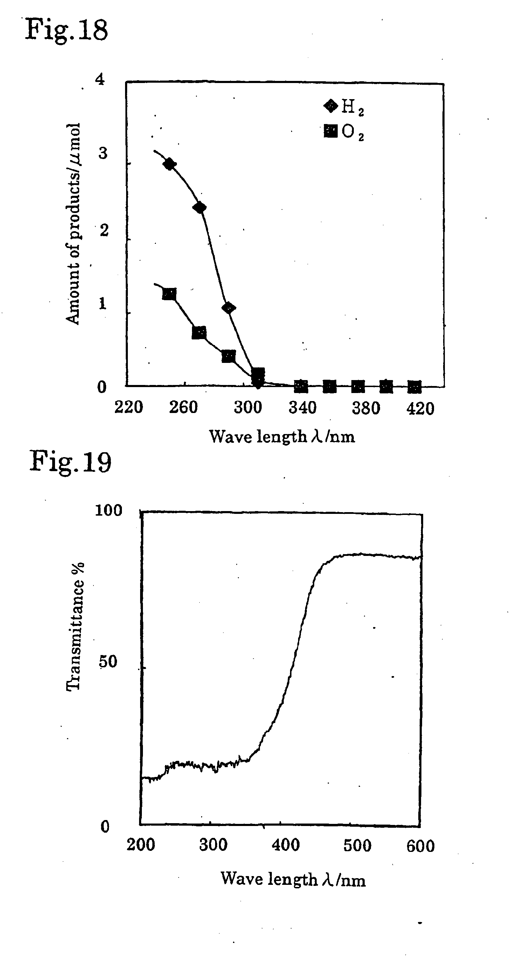

In Fig. 18, the change of photo-catalytic activity of RuO₂/Na₄Ta₈P₄O₃₂ when the wave length of irradiation light was changed is shown.
An Xe-lamp and a cut off filter was used as the light source. By the longer wave length than 340nm both H₂ and O₂ did not generate, and small generation of H₂ was observed at 340nm around, further, O₂ generated from 310nm around. By the irradiation of shorter wave length than 310nm, the generating activity of H₂ and O₂ improved remarkably.

### Example 3

Diffuse reflectance spectrum of Na₃InP₂O₈;
As shown in Fig.19, the photo absorption started at 480nm, and the maximum absorption wave length was observed at 380nm around. The absorption end existed in visible light region. The dipole moment was 0.5 debye.
While the dipole moment of Na₃In₂P₃O₁₂ was 3.5debye.

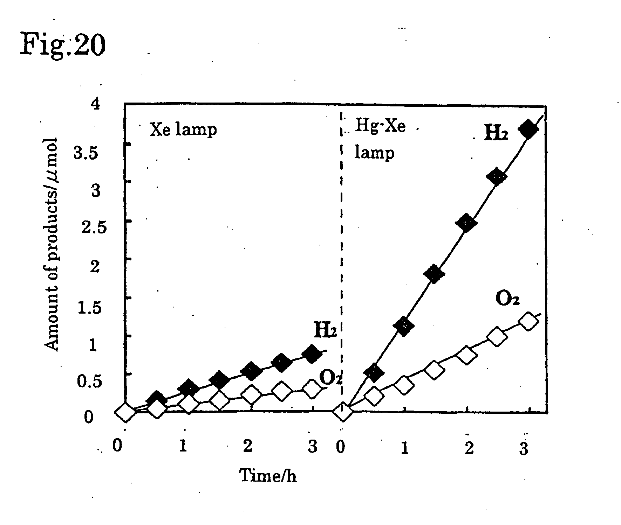

Photo decomposition characteristic of RuO₂/Na₃InP₂O₈;
The change by time lapse of reaction by RuO₂/Na₃InP₂O₈ and Hg-Xe lamp is shown in Fig.20. The generation of H₂ and O₂ increased linearly from the initial stage of the light irradiation.

### INDUSTRIAL APPLICABILITY

As mentioned above, since the novel photo-catalyst of the present invention can proceed the complete decomposition of water, the present invention provides a photo active catalyst for water decomposition which is closing more to the practical use. Namely, provides an excellent effect to the concerned industry.

## Claims

1. A photo-catalyst comprising RuO₂ supported on a carrier compound having a network structure in which structural units each constituting an oxygen octahedron or tetrahedron are linked to structural units each constituting a PO₄ tetrahedron, the compound further containing an alkali metal, wherein the carrier has the empirical formula AₓMe₂ₘP₄O₆ₘ₊₈, wherein A is Na, K or Li, Me is Nb or Ta in the d⁰ configuration, x is 2, 3 or 4 and m is 3, 3.5 or 4, or wherein the carrier compound has the empirical formula A₃InₘPₘ₊₁O₄ₘ₊₄, wherein A is Na, K or Li ion, m is 1 or 2 and In is in the d¹⁰ configuration.

2. A photo-catalyst according to claim 1, wherein the oxygen octahedra containing the transition metal ion in d⁰ configuration are strained and have a dipole moment.

3. A photo-catalyst according to claim 1, wherein the oxygen octahedra containing the transition metal ion in d¹⁰ configuration are strained and have a dipole moment.

4. Use of a photocatalyst according to any one of claims 1 to 3 for the complete decomposition of water.

5. A process for decomposing water comprising contacting a catalyst according to any one of claims 1 to 3 with water and exposing the catalyst to a 400W Xe short arc lamp or a 200W Hg-Xe lamp.

## Patentansprüche

1. Photokatalysator, umfassend RuO₂, geträgert an einer Trägerverbindung, die eine Netzwerkstruktur hat, in der Struktureinheiten, die jeweils einen Sauerstoff-Oktaeder oder - Tetraeder bilden, mit Struktureinheiten verknüpft sind, die jeweils einen PO₄-Tetraeder bilden, wobei die Verbindung außerdem ein Alkalimetall enthält, wobei der Träger die empirische Formel AₓMe₂ₘP₄O₆ₘ₊₈ hat, worin A für Na, K oder Li steht, Me für Nb oder Ta in der d⁰-Konfiguration steht, x 2, 3 oder 4 ist und m 3, 3,5 oder 4 ist, oder wobei die Trägerverbindung die empirische Formel A₃InₘPₘ₊₁O₄ₘ₊₄ hat, wobei A für Na, K oder Li-Ion steht, m 1 oder 2 ist und In in der d¹⁰-Konfiguration ist.

2. Photokatalysator gemäß Anspruch 1, wobei die Sauerstoff-Oktaeder, die das Übergangsmetallion in der d⁰-Konfiguration enthalten, gestreckt sind und ein Dipol-Moment haben.

3. Photokatalysator gemäß Anspruch 1, wobei die Sauerstoff-Oktaeder, die das Übergangsmetallion in der d¹⁰-Konfiguration haben, gestreckt sind und ein Dipol-Moment haben.

4. Verwendung eines Photokatalysators gemäß einem der Ansprüche 1 bis 3 für die vollständige Zersetzung von Wasser.

5. Verfahren zur Zersetzung von Wasser, umfassend In-Kontakt-Bringen eines Katalysators gemäß einem der Ansprüche 1 bis 3 und Exponieren des Katalysators gegenüber einer 400W-Xe-Kurzbogenlampe oder einer 200W-Hg-Xe-Lampe.

## Revendications

1. Photo-catalyseur comprenant de l'oxyde de ruthénium RuO₂ supporté par un composé support doté d'une structure en réseau dans laquelle des unités structurales constituant chacune un octaèdre ou un tétraèdre d'atomes d'oxygène sont liées à des unités structurales constituant chacune un tétraèdre phosphate PO₄, ledit composé comprenant en outre un métal alcalin, dans lequel
- le support a pour formule empirique AₓMe₂ₘP₄O₆ₘ₊₈, dans laquelle A représente Na, K ou Li, Me représente Nb ou Ta en configuration d⁰, x vaut 2, 3 ou 4, et m vaut 3, 3,5 ou 4 ;
- ou le composé support a pour formule empirique A₃InₘPₘ₊₁O₄ₘ₊₄, dans laquelle A représente un ion Na, K ou Li, m vaut 1 ou 2, et In se trouve en configuration d¹⁰.

2. Photo-catalyseur conforme à la revendication 1, dans lequel les octaèdres d'atomes d'oxygène contenant un ion du métal de transition en configuration d⁰ sont déformés et ont un moment dipolaire.

3. Photo-catalyseur conforme à la revendication 1, dans lequel les octaèdres d'atomes d'oxygène contenant un ion du métal de transition en configuration d¹⁰ sont déformés et ont un moment dipolaire.

4. Utilisation d'un photo-catalyseur conforme à l'une des revendications 1 à 3 pour la décomposition totale de l'eau.

5. Procédé de décomposition de l'eau, comportant le fait de mettre en contact avec de l'eau un catalyseur conforme à l'une des revendications 1 à 3, et le fait d'exposer ce catalyseur à la lumière d'une lampe à arc court au xénon de 400 W ou d'une lampe au mercure-xénon de 200 W.
